# EUROPÄISCHE PATENTSCHRIFT

(11) **EP 3 110 544 B1**
(45) Veröffentlichungstag und Bekanntmachung des Hinweises auf die Patenterteilung: **21.03.2018**
(21) Anmeldenummer: 14776591.1
(22) Anmeldetag: 25.08.2014
(51) Int. Cl.: B01J 20/10, B01J 20/28, B01J 20/30, B01J 20/32, B01J 20/34, C01B 33/113, C02F 1/28, C02F 1/40, C02F 101/32, C02F 101/10, C02F 103/10, C02F 103/36, C09K 3/18, C09K 3/32

(54) **NANOSTRUKTURIERTER SAND UND VERFAHREN ZUR HERSTELLUNG VON NANOSTRUKTURIERTEM SAND**
NANOSTRUCTURED SAND AND PROCESS FOR PRODUCING NANOSTRUCTURED SAND
SABLE NANOSTRUCTURÉ ET PROCÉDÉ DE PRODUCTION DE SABLE NANOSTRUCTURÉ

(30) Priorität: 25.02.2014 DE 102014102468; 14.03.2014 DE 102014103530
(43) Veröffentlichungstag der Anmeldung: 04.01.2017
(73) Patentinhaber: Schneider, Ute Margitta, 12619 Berlin (DE)
(72) Erfinder: SCHNEIDER, Jürgen, 12619 Berlin (DE)
(74) Vertreter: Prinz & Partner mbB
(86) Internationale Anmeldenummer: PCT/EP2014/067995
(87) Internationale Veröffentlichungsnummer: WO 2015/128010

(56) Entgegenhaltungen:
- CN-A- 102 942 319
- DE-A1- 1 951 222
- US-A1- 2007 189 944

## Beschreibung

### Technisches Gebiet:

Die vorliegende Erfindung betrifft nanostrukturierten Sand sowie ein Verfahren zur Herstellung des nanostrukturierten Sandes gemäß den unabhängigen Ansprüchen der vorliegenden Anmeldung.

### Stand der Technik:

Bei der Gewinnung von Erdöl wird das Erdöl meist als Öl-Wasser-Gemisch zutage gefördert. Sinkt im Laufe der Erdölförderung der Eigendruck der Lagerstätte (Primärförderung), kann insbesondere durch Einpressen von Wasser mittels geeigneter Vorrichtungen der Förderdruck erhöht werden (Sekundärförderung). Bei der Sekundärförderung wird ungefähr die dreifache Menge Wasser im Verhältnis zum geförderten Öl eingesetzt. Bei einer Erdölförderung von ca. 26 Millionen Liter pro Tag werden somit ca. 78 Millionen Liter Wasser pro Tag benötigt.

Um das Erdöl weiterverarbeiten zu können, muss es zuerst aus dem Öl-Wasser-Gemisch abgetrennt werden. Gemäß der Verfahren des Standes der Technik verbleiben derzeit trotz Filterung noch 7 bis 10 % Öl als Rückstand im Wasser. Da dieses Öl-Wasser-Gemisch derzeit nicht weiter industriell aufgereinigt werden kann, wird das so verschmutzte Wasser derzeit in sogenannten Lagunen angelegt, um das Wasser verdunsten zu lassen und so das fest gewordene Öl anschließend nach mehreren Jahren zu bergen und zu verheizen.

Folglich ist das derzeit eingesetzte Verfahren zur Abtrennung des 7- bis 10 %-igen Ölrückstandes sowohl ökologisch als auch ökonomisch ineffizient, da i) die Lagunen in dem Gebiet um die Erdölförderung angelegt werden müssen und somit zu einer Umweltverschmutzung führen können, ii) der 7- bis 10 %-ige Ölrückstand nicht industriell verwertet werden und iii) das eingesetzte Wasser aufgrund der Verdunstung nicht wieder verwendet und insbesondere der Erdölförderung nicht wieder zugeführt werden kann.

Aus der Patentschrift CN 102942319 A ist bekannt, Quartzsand mittels Zinkoxid-Nanopartikeln und einem fluorierten Silikonharz zu hydrophobisieren. Dieser hydrophobisierte Sand wird zur Öl-Wasser-Trennung z.B. bei Erdölbohrungen vorgeschlagen. Die Aufgaben der vorliegenden Erfindung bestehen darin, ein Erzeugnis zur Abtrennung des 7- bis 10 %-eigen Ölrückstandes bei der Erdölproduktion zur Verfügung zu stellen, i) bei dem das Risiko einer Umweltverschmutzung reduziert ist, ii) die Ausbeute des Erdöls erhöht wird und/oder iii) das eingesetzte Wasser wieder verwendet werden kann, beispielsweise zur Erdölförderung.

### Kurze Beschreibung der Erfindung:

Die vorgenannten Aufgaben werden teilweise oder vollständig anhand der erfindungsgemäß beanspruchten Gegenstände gelöst. Vorteilhafte Ausgestaltungen werden in den abhängigen Ansprüchen sowie in der nachfolgenden Beschreibung dargestellt.

Dementsprechend betrifft eine erste erfindungsgemäße Ausgestaltung der vorliegenden Erfindung einen nanostrukturierten Sand gemäß Anspruch 1.

Eine zweite erfindungsgemäße Ausgestaltung betrifft ein Verfahren zur Herstellung eines erfindungsgemäßen nanostrukturierten gemäß Anspruch 3. Die vorstehend beschriebenen erfindungsgemäßen Ausgestaltungen können, sofern aus Sicht eines Fachmanns sinnvoll, jede mögliche Kombination der bevorzugten erfindungsgemäßen Ausgestaltungen, die nachfolgend und insbesondere auch in den abhängigen Ansprüchen offenbart werden, aufweisen.

### Kurze Beschreibung der Figuren:

Fig. 1: Behälter mit Wasser-Öl-Mischung und erfindungsgemäßer absinkender nanostrukturierter Sand-Öl-Verbund
Fig. 2: Behälter mit Wasser-Öl-Mischung und erfindungsgemäßer abgesunkener nanostrukturierter Sand-Öl-Verbund
Fig. 3: Behälter mit Wasser-Öl-Mischung und erfindungsgemäßer hydrophober nanostrukturierter Sand, der auf Wasseroberfläche schwimmt sowie abgesunkener erfindungsgemäßer nanostrukturierter Sand-Öl-Verbund
Fig. 4: Üblicher Sand (ohne Nano) mit versickertem Wasser und erfindungsgemäß nanostrukturierter Sand (mit Nano) mit Wassertropfen
Fig. 5a), 5b) und 5c): Erfindungsgemäß nanostrukturierter Sand auf Glasplatte (Fig. 5a); Erfindungsgemäß nanostrukturierter Sand mit Motoröl (Fig. 5b), Verbund aus erfindungsgemäß nanostrukturiertem Sand und Motoröl (Fig. 5c)

### Detaillierte Beschreibung der Erfindung:

Die Erfinder haben überraschenderweise gefunden, dass ein erfindungsgemäß nanostrukturierter Sand zur weiteren Abtrennung des bei der Erdölförderung entstehendes Öl-Wasser-Gemisches (7 bis 10 % Ölrückstand im Wasser) verwendet werden kann, da das im Wasser vorliegende Erdöl aufgrund der erfindungsgemäßen Nanostrukturierung des Sandes dauerhaft an die Oberfläche des Sandes gemäß dem hier beschriebenen Abtrennverfahren gebunden wird. Im Vergleich hierzu bildet herkömmlicher, d.h. nicht erfindungsgemäß nanostrukturierter Sand keinen dauerhaften Sand-Erdöl-Verbund aus, so dass das Öl sich wieder von dem Sand löst und das Wasser somit nicht dauerhaft gereinigt wird. Dauerhafter Sand-Öl-Verbund bedeutet, dass dieser sich bei den üblichen Umgebungsbedingungen nicht voneinander löst. Allerdings kann der dauerhafte Sand-Erdöl-Verbund bei Anwendung von zusätzlichen physikalischen Bedingungen, wie beispielsweise Druckerhöhung und/oder Temperaturerhöhung, und/oder Zusatz von geeigneten Chemikalien, beispielsweise Zusatz von geeigneten oberflächenaktiven Verbindungen, sogenannte Tenside, vorzugsweise umweltschonende bioabbaubare Tenside, wieder getrennt werden.

Der so entstandene Öl-Sand-Verbund kann gemäß üblicher Abtrennverfahren zumindest teilweise von dem Wasser abgetrennt werden, sodass eine deutliche Reduktion des Ölrückstandes im Wasser ermöglicht wird. Vorzugsweise wird der Ölrückstrand vollständig von dem Wasser abgetrennt. Somit wird eine Wasseraufreinigung aufgrund physikalischer Kräfte ohne Einsatz chemischer Substanzen ermöglicht und dadurch das Risiko einer Umweltverschmutzung reduziert.

Dieses aufgereinigte Wasser kann erneut verwendet werden und insbesondere der Erdölförderung wieder zugeführt werden, so dass ein geschlossener Wasserkreislauf und damit eine Reduzierung der Kosten für den Wasserverbrauch ermöglicht wird. Für den Fall, dass der Öl-Sand-Verbund vollständig von dem Wasser abgetrennt wird, kann das Wasser - abhängig von der ursprünglichen Beschaffenheit - sogar auch als Trinkwasser verwendet werden.

Da aufgrund der weiteren Aufreinigung kein Öl-Wasser-Gemisch in Lagunen gelagert werden muss, wird zusätzlich das Risiko einer Umweltverschmutzung deutlich reduziert.

Für den Fall, dass das Erdöl aus dem Öl-Sand-Verbund gemäß üblicher Verfahren, insbesondere durch Verwendung von Überdruck beispielsweise mittels Zentrifugen, abgetrennt wird, kann zudem durch die Verwertung des 7- bis 10 %-igen Ölrückstandes die Erdölfördermenge deutlich erhöht werden. Bei einer Fördermenge von beispielsweise 168.000 Barrel Erdöl pro Tag können somit ca. 12.000 bis 17.000 Barrel Erdöl pro Tag (entspricht dem 7- bis 10 %-igen Erdölrückstand) zusätzlich industriell verwertet und dadurch der Umsatz deutlich gesteigert werden.

Des Weiteren haben die Erfinder überraschenderweise gefunden, dass durch den erfindungsgemäß nanostrukturierten Sand nicht nur Erdöl von einem entsprechenden Wassergemisch getrennt werden kann, sondern alle Schadstoffe abgetrennt werden können, die geeignet sind an die Oberfläche des erfindungsgemäßen nanostrukturierten Sandes zu binden. Folglich kann der erfindungsgemäße nanostrukturierte Sand verwendet werden, um ein oder mehrere unterschiedliche geeignete Schadstoffe von einem entsprechenden Schadstoff-Wasser-Gemisch abzutrennen, wobei der oder die zwei, drei, vier oder mehrere unterschiedliche Schadstoffe ausgewählt werden können aus der Gruppe bestehend aus Fetten und/oder Ölen, wie vorzugsweise Erdöl, Motorenöl; schwefelhaltige Verbindungen, beispielsweise Schwefel; arsenhaltige Verbindungen, beispielsweise Arsen; goldhaltige Verbindungen, beispielsweise Gold, quecksilberhaltige Verbindungen, beispielsweise Quecksilber.

Gemäß der ersten erfindungsgemäßen Ausgestaltung umfasst der nanostrukturierte Sand ein oder mehrere Sandkörner, wobei zumindest ein Teil der Sandkörner einen Durchmesser im Bereich von 0,1 mm bis 10 mm, vorzugsweise im Bereich von 0,1 mm bis 3 mm aufweisen, und zumindest ein Teil der Sandkörner eine Oberfläche aufweist, die zumindest teilweise mit einem oder mehreren Nanopartikeln auf Siliziumbasis strukturiert ist und der oder die Nanopartikel auf Siliziumbasis aus anorganischen Nanopartikeln auf Siliziumbasis bestehen, die keine Salze umfassen und die einen Partikeldurchmesser von 1 bis 900 nm, vorzugsweise 5 bis 500 nm, weiter bevorzugt 10 bis 200 nm aufweisen, mit der Maßgabe, dass der nanostrukturierte Sand frei von Silikon und frei von Phosphat und frei von organischen Verbindungen ist. Der erfindungsgemäße nanostrukturierte Sand ist herstellbar gemäß dem erfindungsgemäßen Herstellverfahren gemäß zweiter erfindungsgemäßer Ausgestaltung, das folgende Schritte umfasst oder daraus besteht:
a) Bereitstellen von Sand umfassend ein oder mehrere Sandkörner, wobei zumindest ein Teil der Sandkörner einen Durchmesser im Bereich von 0,1 mm bis 10 mm, vorzugsweise im Bereich von 0,1 mm bis 3 mm aufweisen,
b) Bereitstellen von ein oder mehreren Nanopartikeln auf Siliziumbasis in einer Trägerflüssigkeit, wobei die Nanopartikel aus anorganischen Nanopartieln auf Siliziumbasis bestehen, die keine Salze umfassen und die einen Partikeldurchmesser von 1 bis 900 nm, vorzugweise von 5 bis 500 nm, weiter bevorzugt 10 bis 200 nm aufweisen,
c) Mischen des Sandes aus Schritt a) mit dem oder den Nanopartikeln aus Schritt b) und anschließend
d) Erhitzen des Sand-Nanopartikel-Gemisches aus Schritt c), bis zumindest ein Teil des Sandes aus Schritt a) eine Oberfläche aufweist, die zumindest teilweise mit dem oder den Nanopartikeln auf Siliziumbasis aus Schritt b) strukturiert ist, mit der Maßgabe, dass der nanostrukturierte Sand frei von Silikon und frei von Phosphat und frei von organischen Verbindungen ist.

Als geeigneten Sand für Schritt a) kann jeder üblicherweise erhältliche Sand, beispielsweise Strandsand, Wüstensand, Terrariensand, Vogelsand etc. verwendet werden. Gemäß der vorliegenden Erfindung umfasst erfindungsgemäß zu verwendender Sand Sandkörner im Korngrößenbereich von 0,1 mm bis 10 mm, d.h. üblichen Sand mit Korngrößendurchmesser von 0,1 mm bis 0,5 mm, bzw. Sand-Kies-Gemische, d.h. üblichen Sand mit Korngrößendurchmesser von 0,1 mm bis 0,5 mm sowie größere Sandkörner, auch Kies genannt, mit Korngrößendurchmessern von > 0,5 mm bis 10 mm bzw. Kies, d.h. Sandkörner mit einem Korngrößendurchmessern von > 0,5 mm bis 10 mm. Erfindungsgemäß hydrophober nanostrukturierter Sand, der beispielsweise auf der Wasseroberfläche schwimmen soll, weist vorzugsweise einen Korndurchmesser von 0,1 mm bis ca. 3 mm auf. Sandkörner mit einem Korndurchmesser > 3 mm werden üblicherweise aufgrund ihres Eigengewichts unabhängig von der Hydrophobizität des erfindungsgemäß nanostrukturierten Sandes nicht auf der Wasseroberfläche schwimmen, sondern absinken. Wird ein solcher erfindungsgemäßer Sand mit einem Korndurchmesser > 3 mm zur Abtrennung eines Schadstoffes verwendet, der auf der Wasseroberfläche schwimmt, beispielsweise Fette bzw. Öle, vorzugsweise Erdöl oder Motorenöl, dann bindet auch dieser den oder die Schadstoffe, beispielsweise Fette bzw. Öle, vorzugsweise Erdöl oder Motorenöl, wenn er auf den oder die Schadstoffe gegeben wird.

Erfindungsgemäß zu verwendender Sand kann trocken oder nass sein. Wird nasser erfindungsgemäß zu verwendender Sand eingesetzt in Schritt a) des erfindungsgemäßen Herstellverfahrens, kann die Menge an Trägerflüssigkeit in Schritt b) reduziert werden, ggf. kann auf die Trägerflüssigkeit in Schritt b) verzichtet werden.

Gemäß einer bevorzugten Ausgestaltung ist der in Schritt a) eingesetzte Sand vorzugsweise trocken.

Gemäß des erfindungsgemäßen Herstellverfahrens werden in Schritt b) rein anorganische Nanopartikel auf Siliziumbasis verwendet, die keine Salze, insbesondere Halogenide umfassen. Gemäß einer kumulativ oder alternativ bevorzugten Ausgestaltung des erfindungsgemäßen Herstellverfahrens wird in Schritt b) vorzugsweise gemahlenes Silizium als Nanopartikel auf Siliziumbasis verwendet. Die Nanopartikel auf Siliziumbasis, vorzugsweise gemahlenes Silizium weisen einen Partikeldurchmesser von 1 bis 900 nm, vorzugsweise 5 bis 500 nm, weiter bevorzugt 10 bis 200 nm auf. Der erfindungsgemäß nanostrukturierte Sand ist frei von Silikon und frei von Phosphat und frei von organischen Verbindungen, weiter bevorzugt frei von organischen Polymerverbindungen, noch weiter bevorzugt frei von organischen halogenhaltigen Polymerverbindungen, beispielsweise Teflon.

Gemäß einer weiteren kumulativ oder alternativ bevorzugten Ausgestaltung des erfindungsgemäßen Herstellverfahrens kann in Schritt b) jede übliche geeignete Flüssigkeit bzw. jedes übliche geeignete Flüssigkeitsgemisch als Trägerflüssigkeit verwendet werden, beispielsweise Wasser oder ein Wassergemisch, organische Lösungsmittel, wie beispielsweise Alkohol, Aceton etc.. Vorzugsweise wird aus ökologischen Gründen Wasser oder ein Wassergemisch als Trägerflüssigkeit verwendet. Gemäß einer kumulativ oder alternativ bevorzugten Ausgestaltung des erfindungsgemäßen Herstellverfahrens lösen sich die in Schritt b) bereitgestellten Nanopartikel auf Siliziumbasis einschließlich der bevorzugten Ausgestaltungen nicht in den Trägerflüssigkeiten, sodass bei Abtrennung des erfindungsgemäßen Sandes von dem Wasser keine Rückstände von dem erfindungsgemäßen Sand im Wasser verbleiben.

Gemäß des erfindungsgemäßen Herstellverfahrens wird in Schritt b) eine Menge an Nanopartikeln auf Siliziumbasis, vorzugsweise gemahlene Siliziumnanopartikel bzw. eine Menge an Nanopartikel-Trägerflüssigkeitsgemisch bereitgestellt, die ausreicht, um zumindest einen Teil, vorzugsweise einen Großteil der Oberfläche der Sandkörner aus Schritt a) mit den Nanopartikeln zu strukturieren.

Gemäß Schritt c) des erfindungsgemäßen Herstellverfahrens kann jedes üblicherweise geeignete Mischverfahren verwendet werden, um den Sand aus Schritt a) mit den Nanopartikeln in Trägerflüssigkeit gemäß Schritt b) zu mischen. Vorzugsweise wird in Schritt c) des erfindungsgemäßen Herstellverfahrens der Sand mit der Nanopartikel-Trägerflüssigkeit solange gemischt bis eine homogene Mischung entstanden ist.

Das Mischverfahren gemäß Schritt c) des erfindungsgemäßen Herstellverfahrens wird üblicherweise bei Temperaturen über dem Gefrierpunkt und unter dem Siedepunkt der Trägerflüssigkeit durchgeführt, da ansonst möglicherweise keine vollständige Durchmischung des Sandes und des Nanopartikel-Trägerflüssigkeitsgemisches gewährleistet werden kann.

Das Mischen des Sandes aus Schritt a) mit dem oder den Nanopartikeln aus Schritt b) gemäß Verfahrensschritt c) des erfindungsgemäßen Herstellverfahrens kann gemäß üblicher Mischverfahren durchgeführt werden.

Das Sand-Nanopartikel-Trägerflüssigkeitsgemisch aus Schritt d) wird erfindungsgemäß so lange erhitzt, bis zumindest ein Teil des Sandes aus Schritt a) eine Oberfläche aufweist, die zumindest teilweise mit dem oder den Nanopartikeln auf Siliziumbasis aus Schritt b) strukturiert ist. Üblicherweise wird das Gemisch auf eine Temperatur in der Nähe des Siedepunktes des Trägerflüssigkeit oder höher erhitzt. Beispielsweise wird bei destilliertem Wasser als Trägerflüssigkeit die Temperatur vorzugsweise auf ≥ 70 °C, vorzugsweise 80 bis 200 °C, weiter bevorzugt 90 bis 150 °C erhitzt. Üblicherweise wird das Sand-Nanopartikel-Trägerflüssigkeitsgemisch so lange erhitzt, bis der Sand zumindest teilweise, vorzugsweise vollständig trocken ist und zumindest teilweise, vorzugsweise zum Großteil, weiter bevorzugt vollständig die erfindungsgemäß nanostrukturierte Oberfläche aufweist. Bei höheren Temperaturen verkürzt sich die Trocknungszeit des Sandes entsprechend. Die Trocknungszeit kann ebenfalls verkürzt werden indem der gemäß Schritt a) verwendete Sand und/oder die gemäß Schritt b) eingesetzten Nanopartikel in Trägerflüssigkeit bereits erhitzt werden. Vorzugsweise wird der Sand und/oder die Nanopartikel in Trägerflüssigkeit auf Temperaturen unterhalb des Siedepunktes der Trägerflüssigkeit erhitzt. Am Beispiel Wasser als Trägerflüssigkeit wird der Sand und/oder die Nanopartikel in Trägerflüssigkeit vorzugsweise auf Temperaturen im Bereich von 30°C bis 90°C, weiter bevorzugt 50°C bis 85°C, noch weiter bevorzugt 60°C bis 80°C erhitzt. Die Dauer des Trocknungsprozesses gemäß Schritt d) kann so deutlich reduziert werden.

Der erfindungsgemäße nanostrukturierte Sand ermöglicht insbesondere aufgrund der Nanostrukturierung eine Oberflächenvergrößerung des Sandes und dadurch die Bindung eines oder mehrerer unterschiedlicher Schadstoffe.

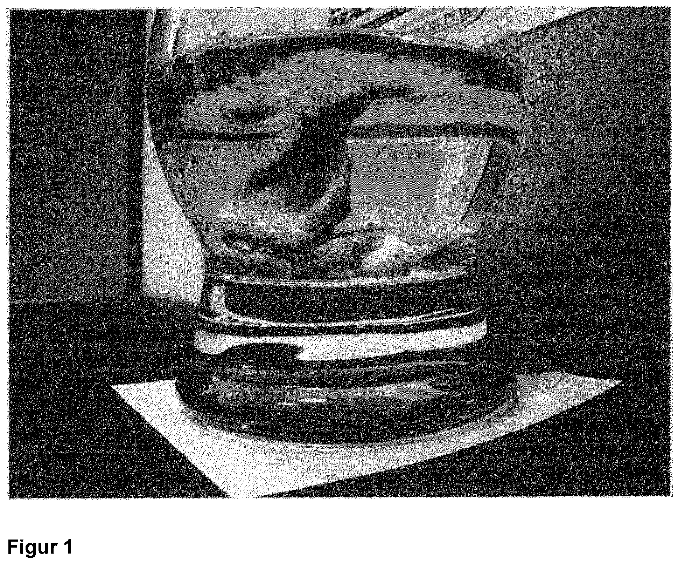

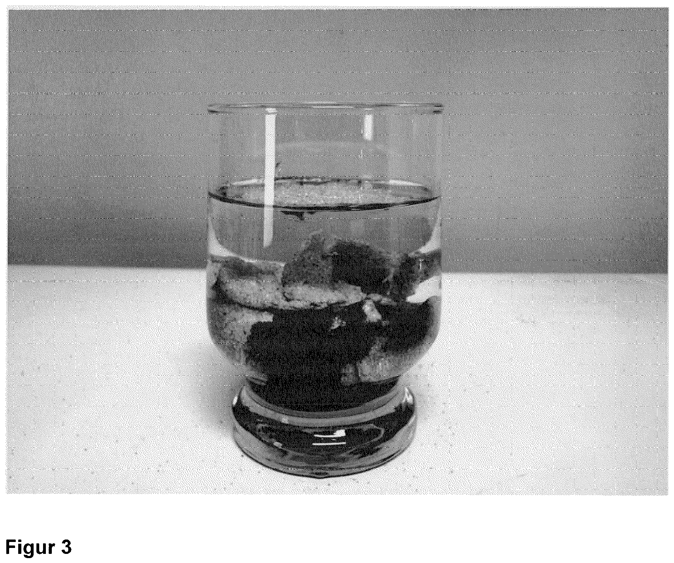

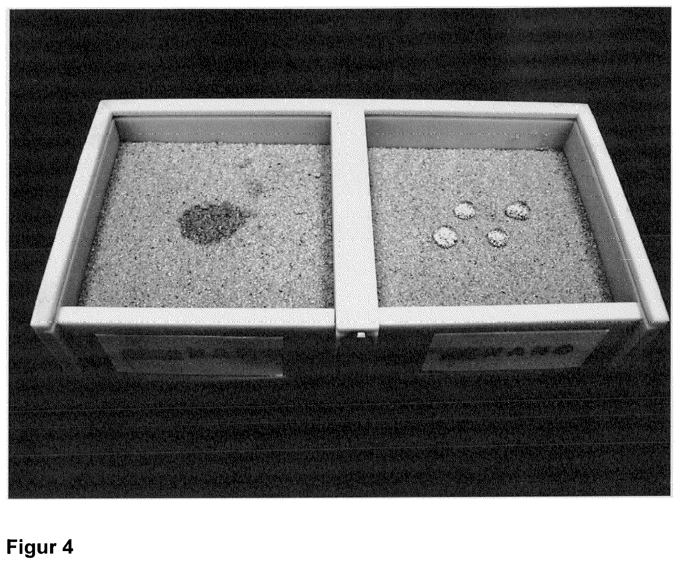

In einer bevorzugten Ausgestaltung weist der erfindungsgemäße Sand aufgrund der Nanostrukturierung eine Oberfläche auf, die einen Wasserkontaktwinkel θ bei Raumtemperatur von ≥ 90°, vorzugsweise ≥ 100°, weiter bevorzugt ≥ 110° aufweist. Figur 4 zeigt üblichen Sand (ohne Nano) und erfindungsgemäß nanostrukturierten Sand, auf die jeweils Wasser gegeben wird. Figur 4 zeigt, dass das Wasser in üblichem Sand direkt versickert, wobei sich bei erfindungsgemäß nanostrukturiertem Sand Wassertropfen mit einem Wasserkontaktwinkel θ bei Raumtemperatur von ≥ 90°, vorzugsweise ≥ 100°, weiter bevorzugt ≥ 110° ausbilden. Ein Wasserkontaktwinkel θ von ≥ 90° ist ein Indiz dafür, dass die Oberfläche des nanostrukturierten Sandes hydrophob ist und der erfindungsgemäße Sand - abhängig vom jeweiligen Eigengewicht - zunächst auf der Oberfläche des Wassers schwimmen kann (siehe auch Figuren 1 und 3). Ein entsprechender nanostrukturierter Sand wird vorzugsweise zur Abtrennung von solchen Schadstoffen eingesetzt, die sich an der Wasseroberfläche befinden, beispielsweise Fetten und/oder Ölen, wie vorzugsweise Erdöl, Motorenöl; schwefelhaltige Verbindungen, beispielsweise Schwefel; arsenhaltige Verbindungen, beispielsweise Arsen; goldhaltige Verbindungen, beispielsweise Gold, quecksilberhaltige Verbindungen, beispielsweise Quecksilber.

Der erfindungsgemäße nanostrukturierte Sand, der vorzugsweise eine hydrophobe Oberfläche aufweist wird vorzugsweise nicht nur a) bei der Abtrennung eines oder mehrerer unterschiedlicher Schadstoffe aus einem Schadstoff-Wasser-Gemisch verwendet, sondern kann auch als b) Wasserbarriereschicht in der Landwirtschaft, c) zum Schutz vor Bodenunterwaschungen, d) bei der Landgewinnung im Küstenbereich oder e) bei Hochwasser angewendet werden, und kann ebenfalls als f) Barriereschicht für Wasser und/oder in Wasser gelöster Schadstoffe bei Mülldeponien, g) als Wasserbarriereschicht im Hochbau oder h) als Wasserbarriereschicht im Tiefbau und/oder als i) Bremssand bei Schienenfahrzeugen verwendet werden.

Wenn der erfindungsgemäße hydrophobe nanostrukturierte Sand als Wasserbarriereschicht in der Landwirtschaft oder auch Landschaftsbau bzw. Gartenbau verwendet wird, wird üblicherweise eine Schicht aus erfindungsgemäßem Sand unter dem Mutterboden angeordnet. Durch die Verwendung einer erfindungsgemäßen hydrophoben nanostrukturierten Sandschicht wird einerseits verhindert, dass das Wasser unkontrolliert in das Grundwasser versickern kann und andererseits wird das Gießwasser näher am Wurzelsystem der Pflanzen gehalten. Dadurch kann die Wassermenge zum Gießen reduziert werden. Da der erfindungsgemäße nanostrukturierte Sand gerade im wässrigen Milieu nicht löslich ist und insbesondere keine Chemikalien absondert, kann eine entsprechende nanostrukturierte Sandschicht insbesondere auch für Nutzpflanzen, die für den Verzehr geeignet sind, eingesetzt werden. Die Verwendung von nanostrukturiertem Sand als Wasserbarriereschicht in der Landwirtschaft bzw. im Landschaftsbau bzw. Gartenbau ist überall dort von Vorteil, wo große Wassermengen benötigt werden und/oder hohe Wasserkosten und/oder Wasserknappheit und/oder hohe Umgebungstemperaturen und damit ein hoher Wasserbedarf herrschen. Beispielsweise auf Baumwollplantagen und/oder in Wüstenregionen kann durch die Verwendung einer erfindungsgemäß nanostrukturierten Sandschicht unter dem Mutterboden eine Wassereinsparung von bis zu 75 % erreicht werden.

Wird der erfindungsgemäße hydrophobe nanostrukturierte Sand beispielsweise unter Straßen etc., die unterwaschungsgefährdet sind, verwendet, reduziert der erfindungsgemäße Sand aufgrund seiner Hydrophobizität das Ein- bzw. Durchdringen von Wasser, so dass das Risiko einer Bodenunterwaschung reduziert wird.

Ähnliches gilt bei der Verwendung des erfindungsgemäßen hydrophoben Sandes bei der Landgewinnung in Küstenregionen. Auch hier reduziert der erfindungsgemäße Sand aufgrund seiner Hydrophobizität das Ein- bzw. Durchdringen von Meerwasser und damit den Landabbau.

Wird der erfindungsgemäße hydrophobe Sand zur Befüllung von Sandsäcken zum Einsatz bei Hochwasser eingesetzt kann einerseits wiederum aufgrund der Hydrophobizität das Ein- bzw. Durchdringen von Wasser reduziert werden. Dies führt dazu, dass die Sandsäcke selbst im Wesentlichen trocken bleiben und folglich auch gefüllt gelagert werden können. Bei akutem Hochwasser kann somit Zeit eingespart werden, weil die bereits gefüllten Sandsäcke direkt eingesetzt werden können.

Wird der erfindungsgemäße hydrophobe nanostrukturierte Sand als Sandschicht unter (offenen) Mülldeponien verwendet, kann der erfindungsgemäße Sand einerseits das Versickern von Wasser reduzieren. Zudem kann der erfindungsgemäße Sand aufgrund seiner Nanostrukturierung ein oder mehrere Schadstoffe, die in dem Wasser möglicherweise vorliegen, binden und so das Risiko einer Umweltverschmutzung reduzieren.

Schließlich kann der erfindungsgemäße hydrophobe nanostrukturierte Sand insbesondere auch im Hoch- und/oder Tiefbau eingesetzt werden. Im Hochbau kann der erfindungsgemäße hydrophobe nanostrukturierte Sand beispielsweise als Schicht unter das Fundament angeordnet werden, die das Aufsteigen insbesondere von Grundwasser etc. in das Fundament reduziert bzw. verhindert. Dadurch kann die Haltbarkeit des Fundamentes und die Lebensdauer der Gebäudestruktur erhöht werden.

Im Tiefbau kann der erfindungsgemäße hydrophobe nanostrukturierte Sand beispielsweise zur Abdeckung von Kabelschächten, Rohren etc. verwendet werden. Einerseits werden diese so vor Wasserzutritt und damit vor Korrosion geschützt und andererseits können auch bei Temperaturen um den Gefrierpunkt Reparaturarbeiten durchgeführt werden, da der Sand aufgrund seiner Hydrophobizität nicht gefriert. Dies ermöglicht so insbesondere eine Reduzierung der Arbeitszeit und/oder eine schnellere Behebung des Schadens.

Ein weiteres Einsatzgebiet für den erfindungsgemäßen hydrophoben nanostrukturierten Sand stellen insbesondere Schienenfahrzeuge dar. Bei Schienenfahrzeugen wird beim Bremsen üblicherweise Bremssand aus speziellen Sandbehältern auf die Schienen gegeben, um die Reibung zu erhöhen und damit den Bremsweg zu verkürzen. Es hat sich gezeigt, dass üblicher Sand, der keine erfindungsgemäße Nanostrukturierung aufweist, im Sommer gerade bei hoher Luftfeuchtigkeit zur Verklumpung neigt bzw. im Winter aufgrund der tiefen Temperaturen dazu neigt zu gefrieren. Dies kann zu Störungen im Bremsvorgang führen, da der Sand nicht mehr einwandfrei aus den Sandbehältern auf die Schienen rieseln kann. Um diesen Nachteil zu beheben, werden derzeit die Sandbehälter so umgebaut, dass sie beheizbar sind. Dieser Umbau ist sehr kostenintensiv und auch störanfällig für den Fall, dass die Heizung ausfällt. Als kostengünstigere und weniger störanfälligere Alternative kann der erfindungsgemäße hydrophobe nanostrukturierte Sand als Bremssand bei Schienenfahrzeugen eingesetzt werden, der aufgrund seiner Hydrophobizität das Risiko eines Verklumpens des Sandes bei hoher Luftfeuchtigkeit und/oder eines Gefrierens des Sandes bei Temperaturen um den Gefrierpunkt reduziert.

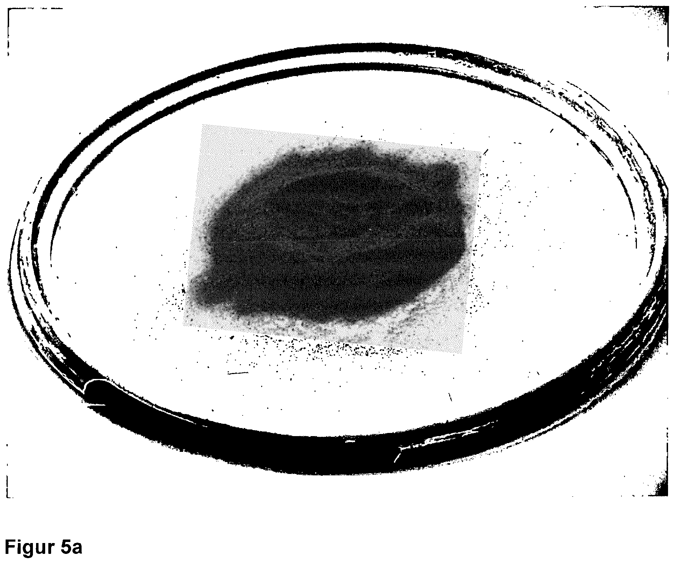

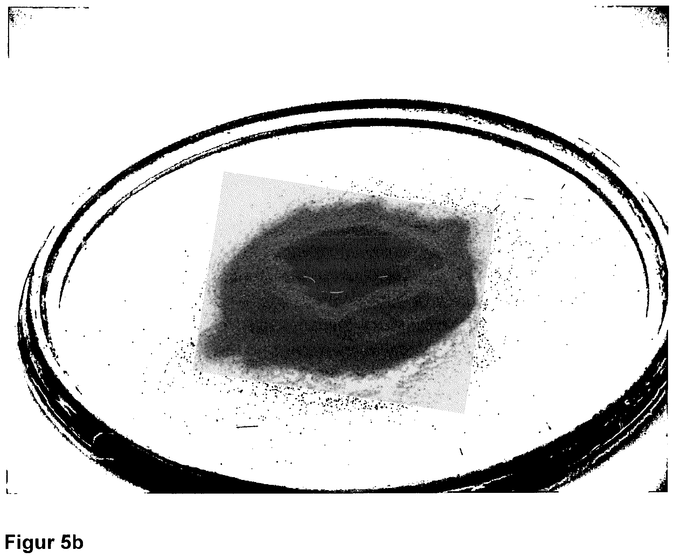

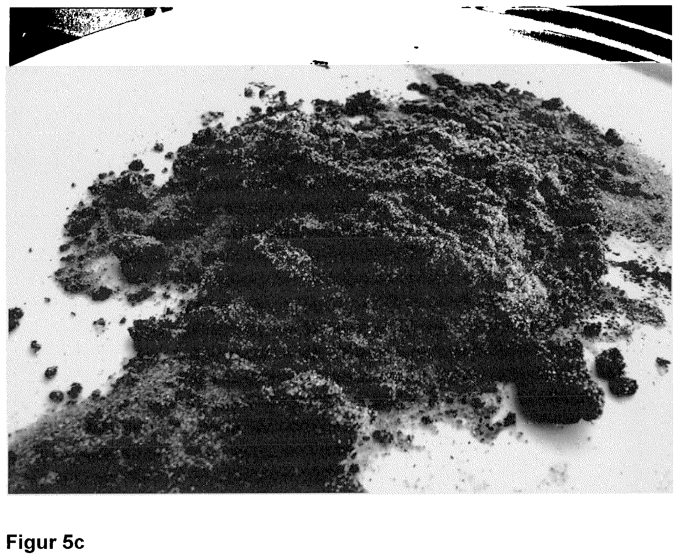

Ein weiteres Einsatzgebiet des erfindungsgemäß nanostrukturierten Sandes stellt der Einsatz als Barriereschicht für Fette und/oder Öle, insbesondere bei Ölhavarieren an Erdölpipelines an Land sowie unter Wasser dar. Wie Figuren 5a) bis 5c) zeigen, verhindert erfindungsgemäß nanostrukturierter Sand abhängig von der eingesetzten Schichtdicke das Durchsickern von Fett und/oder Ölen. Gerade bei Ölhavarien kann so mit einfachen Mitteln eine Umweltverschmutzung verhindert werden. Bei einem Verrühren / Mischen des Sandes mit dem darauf gegebenen Öl kann eine Ausbildung eines Verbundes aus erfindungsgemäßem nanostrukturierten Sand mit dem darauf gegebenem Öl beobachtet werden (Fig. 5c). Einerseits kann das auf der Barriereschicht lokalisierte Öl (vgl. Fig. 5b) mit geeigneten Mitteln leicht entfernt werden. Andererseits kann Öl, das aufgrund von Mischvorgängen (im Rahmen der Entfernung des auf dem erfindungsgemäßen Sandes befindlichen Öles) bereits an die Oberfläche des erfindungsgemäßen Sandes gebunden ist (vgl. Fig. 5c), leicht abtransportiert werden. Das ausgebildete Sand-Öl-Verbund kann leicht gemäß geeigneter Trennverfahren (physikalisch und/oder chemisch) in den erfindungsgemäß nanostrukturierten Sand sowie das Fett bzw. Öl aufgetrennt werden. Der erfindungsgemäß nanostrukturierte Sand kann dann wieder als Barriereschicht eingesetzt werden, während das abgetrennte Fett und/oder Öl beispielsweise der industriellen Verwertung wieder zurückgeführt werden kann.

Der erfindungsgemäße nanostrukturierte Sand kann aber auch zur Trennung eines Schadstoff-Wasser-Gemisches verwendet werden. Ein entsprechendes Verfahren umfasst oder besteht aus folgenden Schritten:
a) Bereitstellen eines Schadstoff-Wasser-Gemisches,
b) Bereitstellen von erfindungsgemäßem nanostrukturiertem Sand,
c) Zusetzen des nanostrukturierten Sandes aus Schritt b) zu dem Schadstoff-Wasser-Gemisch aus Schritt a), bis zumindest ein Teil der Schadstoffe an der Oberfläche des nanostrukturierten Sandes gebunden vorliegt,
d) Trennen zumindest eines Teils des in Schritt c) gebildeten Sand-Schadstoff-Verbundes von dem Wasser und
e) gegebenenfalls zumindest teilweise Abtrennen des oder der Schadstoffe von dem Sand-Schadstoff-Verbund.

Gemäß Schritt a) des Trennverfahrens kann das Schadstoff-Wasser-Gemisch ein oder mehrere unterschiedliche Schadstoffe, die geeignet sind an die Oberfläche des erfindungsgemäßen nanostrukturierten Sandes zu binden, umfassen. Gemäß einer bevorzugten Ausgestaltung werden der oder die zwei, drei, vier oder mehrere unterschiedlichen Schadstoffe ausgewählt aus der Gruppe bestehend aus Fetten und/oder Ölen, wie vorzugsweise Erdöl, Motorenöl; schwefelhaltige Verbindungen, beispielsweise Schwefel; arsenhaltige Verbindungen, beispielsweise Arsen; goldhaltige Verbindungen, beispielsweise Gold, quecksilberhaltige Verbindungen, beispielsweise Quecksilber.

Gemäß Schritt b) kann erfindungsgemäßer nanostrukturierter Sand gemäß erster und/oder zweiter erfindungsgemäßer Ausgestaltung verwendet werden. Sofern ein oder mehrere Schadstoffe abgetrennt werden sollen, die vorwiegend an der Wasseroberfläche angeordnet sind, umfasst der erfindungsgemäße nanostrukturierte Sand zumindest teilweise erfindungsgemäßen hydrophoben nanostrukturierter Sand, d.h. erfindungsgemäßen Sand mit einem Kontaktwinkel θ von ≥ 90°, weiter bevorzugt ≥ 100°, noch weiter bevorzugt ≥ 110°.

Gemäß Schritt c) wird der erfindungsgemäße nanostrukturierte Sand aus Schritt b) zu dem Schadstoff-Wasser-Gemisch aus Schritt a) zugesetzt, bis zumindest ein Teil der Schadstoffe, vorzugsweise die Schadstoffe vollständig an der Oberfläche des nanostrukturierten Sandes gebunden vorliegen. In manchen Ausgestaltungen des Trennverfahrens kann es vorteilhaft sein, den erfindungsgemäßen nanostrukturierten Sand mit dem Schadstoff-Wasser-Gemisch mittels geeigneter Vorrichtungen zu durchmischen. In anderen Ausgestaltungen, insbesondere wenn ein oder mehrere Schadstoffe vorwiegend an der Wasseroberfläche angeordnet sind, beispielsweise bei ausgelaufenem Erdöl bzw. Motorenöl aus Tankern, Bohrtürmen, Erdöltrassen oder bei dem anfallenden Brauchwasser bei der Erdölforderung, kann bei der vorteilhaften Verwendung von hydrophobem nanostrukturiertem Sand auf eine zusätzliche Durchmischung verzichtet werden.

Wird der erfindungsgemäße vorteilhafterweise hydrophobe nanostrukturierte Sand auf den oder die Schadstoffe, vorzugsweise Fette und/oder Öle, wie vorzugsweise Erdöl, Motorenöl gegeben, die an der Wasseroberfläche angeordnet sind, dann wird der bzw. werden die Schadstoffe an die Oberfläche des erfindungsgemäßen nanostrukturierten Sandes zumindest teilweise, vorzugsweise vollständig gebunden. Dieser so entstandene Sand-Schadstoff-Verbund kann aufgrund der Erhöhung des Eigengewichtes im Wasser absinken. Abgesunkener Sand-Schadstoff-Verbund, beispielsweise Sand-Öl-Verbund, der auch noch teilweise erfindungsgemäßen Sand umfasst, dessen Oberfläche nicht vollständig mit Schadstoff, beispielsweise Öl verbunden ist, kann nochmal mit dem Schadstoff, beispielsweise Öl durchmischt werden und so eine größere Menge des Schadstoffes, beispielsweise des Öles binden.

Gemäß Schritt d) des Trennverfahrens wird zumindest ein Teil des in Schritt c) gebildeten Sand-Schadstoff-Verbundes von dem Wasser durch übliche geeignete Techniken abgetrennt. Beispielsweise bilden sich bei Sand-Erdöl-Verbund entsprechende Sand-Erdöl-Klumpen, die auf den Boden absinken bzw. an Land angespült werden. Unter Wasser oder an Land können die entsprechenden Sand-Erdöl-Klumpen mittels geeigneter Techniken, wie beispielsweise mittels Unterwassersaugern etc. geborgen werden. Das Erdöl kann so von dem Wasser, sei es das Brauchwasser bei der Erdölförderung bzw. das Meerwasser bei einer Erdölhavarie, getrennt werden und das verbleibende Wasser hat die vorherige Reinheit wieder erlangt.

In einer vorteilhaften Ausgestaltung des Trennverfahrens wird in einem optionalen Schritt e) der oder die Schadstoffe zumindest teilweise von dem Sand-Schadstoff-Verbund mittels geeigneter physikalischer und/oderchemischer Verfahren abgetrennt. Dies ermöglicht insbesondere die Wiederverwendung des erfindungsgemäßen nanostrukturierten Sandes. Die Trennung von Fetten und/oder Ölen, beispielsweise Erdöl, Motorenöl etc. kann ebenfalls durch Einsatz geeigneter physikalischer (Anwendung von Überdruck und/oder Temperaturerhöhung, etc.) und/oder chemischer (Einsatz von Tensiden etc.) Verfahren aus dem Sand-Erdöl-Verbund abgetrennt werden. Gerade bei der Trennung des Erdöls von dem bei der Erdölförderung anfallenden Brauchwasser, kann dadurch der freigesetzte Erdölrückstand, der aus dem Sand-Erdöl-Verbund gewonnen wird, der industriellen Erdölverwertung zugeführt und dadurch der Erdölertrag gesteigert werden.

Die vorliegende Erfindung wird im Weiteren anhand von beispielhaften Ausführungsarten beschrieben, die lediglich als Beispiele verstanden werden und die nicht den Schutzumfang des vorliegenden Schutzrechtes beschränken sollen.

### Beispiele:

### 1. Herstellung von erfindunasaemäßem nanostrukturierten Sand

### Materialien:

Vogelsand - von Natura Saaten GmbH - D - 28295 Bremen
Terrariensand - JBL GmbH &Co.KG - D - 67141 Neuhofen - Terra Sand
Ostseesand - aus Ahlbeck vom Strand
Die Sandkorndurchmesser betragen für die vorgenannten Sandmaterialien durchschnittlich 0,4 mm.

Für die Versuche wurden jeweils 500 Gramm der vorgenannten Sandmaterialien (Vogelsand, Terrariensand, Ostseesand) in einen geeigneten Behälter, nämlich Topf, mit 50 ml NZB Sandshield (Hersteller: Nano Zentrum Berlin NZB GmbH, Berlin), das erfindungsgemäß einzusetzende Nanopartikel auf Siliziumbasis enthält, gemischt. Die Gemische wurde jeweils verrührt und so stark erwärmt, dass die Flüssigkeit zumindest teilweise, vorzugsweise vollständig verdampft und anschließend vorzugsweise trockener erfindungsgemäß nanostrukturierter Sand vorliegt.

Die so hergestellten erfindungsgemäßen nanostrukturierten Sandmaterialien wurden auf Wasser und simuliertes Meerwasser (200 ml Wasser mit einem halben Teelöffel Kochsalz) gegeben. Es konnte beobachtet werden, dass die so hergestellten erfindungsgemäßen nanostrukturierten Sandmaterialien auf der Wasseroberfläche schwimmen. Werden die erfindungsgemäßen nanostrukturierten Sandmaterialien auf Alkohol, beispielsweise 99%igen Alkohol gegeben, so schwimmen diese aufgrund der geringeren Oberflächenspannung nicht auf der Oberfläche und sinken ab.

Die einzelnen Merkmale des vorstehenden Ausführungsbeispiels können auch in Kombination mit bevorzugten Merkmalen der allgemeinen Beschreibung der Erfindung erfindungsgemäß kombiniert werden.

### 2. Abtrennung von Erdöl aus einem Motorenöl-Wasser-Gemisch (nicht erfindungsgemäß)

In einem Glasbehälter werden 250 ml Wasser und 25 ml Motorenöl bei Raumtemperatur gegeben. Die Mischung wird solange stehen gelassen, bis das Motorenöl an der Wasseroberfläche angeordnet ist.

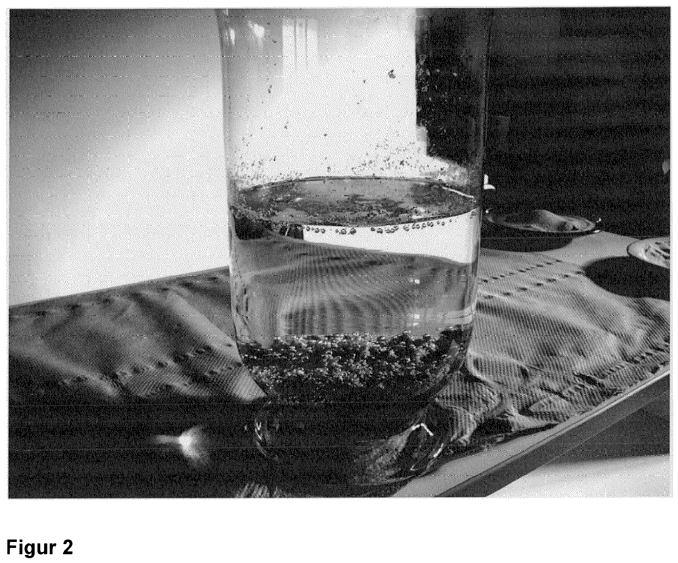

Es wird nun soviel von dem gemäß Beispiel 1 hergestelltem erfindungsgemäßen nanostrukturierten Sand auf das auf dem Wasser schwimmende Motorenöl gegeben, bis zumindest ein Teil, vorzugsweise das gesamte Motorenöl an die Oberfläche des erfindungsgemäßen nanostrukturierten Sand gebunden ist. Figuren 1 bis 3 zeigen jeweils einen Behälter, der eine entsprechende Wasser-Öl-Mischung umfasst. Auf diese Wasser-Ölmischung wurde der erfindungsgemäß nanostrukturierte Sand gegeben. Dieser sinkt teilweise (Figuren 1 und 3) bzw. vollständig (Figur 2) nach Ausbildung des Sand-Öl-Verbundes auf den Behälterboden ab.

Sofern Trübungen zu beobachten sind, wird die Mischung ruhen gelassen und gegebenenfalls wird weiterer erfindungsgemäßer Sand zugegeben.

Optional kann die Mischung gerührt werden, um eine weitere Durchmischung von erfindungsgemäßem nanostrukturierten Sand und Motorenöl zu erreichen.

Für alle drei Sandarten, nämlich Vorgelsand, Ostseesand und Terrariensand konnte eine Abtrennung des Motorenöls von dem Wasser und entsprechende Ausbildung eines Sand-Motorenöl-Verbundes beobachtet werden. Folglich sind alle drei erfindungsgemäß nanostrukturierten Sande geeignet Schadstoffe, insbesondere Öle, wie Motorenöl von Wasser abzutrennen.

Der entstandene Sand-Motorenöl-Verbund wird von dem Wasser mittels dekantieren des Wassers abgetrennt. Das Motorenöl kann mittels Druckanwendung, beispielsweise mittels Zentrifuge, von dem Sand abgetrennt werden. Für die großtechnische Anwendung eignen sich beispielsweise Zentrifugen mit 5-facher Erdbeschleunigung (5G), die derzeit zur Sandtrocknung eingesetzt werden.

Die einzelnen Merkmale des vorstehenden Ausführungsbeispiels können auch in Kombination mit ein oder mehreren bevorzugten Merkmalen der allgemeinen Beschreibung der Erfindung kombiniert werden.

### 3. Ausbildung einer Barriereschicht für Fette und/oder Öle am Beispiel von Motorenöl (nicht erfindungsgemäß)

Eine geeignete Menge erfindungsgemäß nanostrukturierter Sand wird auf einer Glasplatte ausgebreitet (vgl. Fig. 5a). Darauf wurde ein gewisse Menge Motorenöl gegeben. Gemäß Figur 5b) ist ersichtlich, dass das Motorenöl auf der Oberfläche der erfindungsgemäßen Sandschicht verbleibt und nicht in den Sand eindringt. Mit anderen Worten, der erfindungsgemäße nanostrukturierte Sand ist nicht nur hydrophob, sondern auch oleophob. Wird der erfindungsgemäße Sand mit dem darauf befindlichen Öl gemischt (beispielsweise wenn das freie Öl abgetrennt wird), so entsteht ein Sand-Öl-Verbund aus ölummantelten Sandkugeln(vgl. Fig. 5c). Dieser Sand-Öl-Verbund kann einer Abtrennung gemäß vorstehendem Beispielsverfahren 2 unterzogen werden.

Folglich eignet sich der erfindungsgemäß nanostrukturierte Sand insbesondere auch als Barriereschicht für Fette und/oder Öle, um beispielsweise bei Ölhavarien bei Pipelines an Land das Versickern des Erdöls in tieferliegende Erdschichten zu verhindern.

## Patentansprüche

1. Nanostrukturierter Sand umfassend ein oder mehrere Sandkörner, wobei zumindest ein Teil der Sandkörner einen Durchmesser im Bereich von 0,1 mm bis 10 mm, vorzugsweise im Bereich von 0,1 mm bis 3 mm aufweisen und zumindest ein Teil der Sandkörner eine Oberfläche aufweist, die zumindest teilweise mit einem oder mehreren Nanopartikeln auf Siliziumbasis strukturiert ist und der oder die Nanopartikel auf Siliziumbasis aus anorganischen Nanopartikeln auf Siliziumbasis bestehen, die keine Salze umfassen und die einen Partikeldurchmeser von 1 bis 900 nm, vorzugsweise 5 bis 500 nm, weiter bevorzugt 10 bis 200 nm aufweisen, mit der Maßgabe, dass der nanostrukturierte Sand frei von Silikon und frei von Phosphat und frei von organischen Verbindungen ist.

2. Nanostrukturierter Sand gemäß Anspruch 1, **dadurch gekennzeichnet, dass** Wasser bei Raumtemperatur auf der Oberfläche des nanostrukturierten Sandes einen Kontaktwinkel θ von ≥ 90° aufweist.

3. Verfahren zur Herstellung des nanostrukturierten Sandes gemäß Anspruch 1 oder 2, **dadurch gekennzeichnet, dass** das Verfahren folgende Schritte umfasst oder daraus besteht:
a) Bereitstellen von Sand umfassend ein oder mehrere Sandkörner, wobei zumindest ein Teil der Sandkörner einen Durchmesser im Bereich von 0,1 mm bis 10 mm, vorzugsweise im Bereich von 0,1 mm bis 3 mm aufweisen,
b) Bereitstellen von ein oder mehreren Nanopartikeln auf Siliziumbasis in einer Trägerflüssigkeit, wobei die Nanopartikel aus anorganischen Nanopartikeln auf Siliziumbasis bestehen, die keine Salze umfassen und die einen Partikeldurchmesser von 1 bis 900 nm, vorzugsweise 5 bis 500 nm, weiter bevorzugt 10 bis 200 nm aufweisen,
c) Mischen des Sandes aus Schritt a) mit dem oder den Nanopartikeln in Trägerflüssigkeit aus Schritt b) und anschließend
d) Erhitzen des Sand-Nanopartikel-Trägerflüssigkeitsgemisches aus Schritt c) bis zumindest ein Teil des Sandes aus Schritt a) eine Oberfläche aufweist, die zumindest teilweise mit dem oder den Nanopartikeln auf Siliziumbasis aus Schritt b) strukturiert ist, mit der Maßgabe, dass der nanostrukturierte Sand frei von Silikon und frei von Phosphat und frei von organischen Verbindungen ist.

## Claims

1. A nanostructured sand comprising one or more sand grains, wherein at least part of the sand grains has a diameter in the range of 0.1 mm to 10 mm, preferably in the range of 0.1 mm to 3 mm, and at least part of the sand grains exhibits a surface that is at least partially structured with one or more silicon-based nanoparticles, and the silicon-based nanoparticle(s) is/are composed of inorganic silicon-based nanoparticles which do not comprise any salts and have a particle diameter of 1 to 900 nm, preferably 5 to 500 nm, more preferably 10 to 200 nm, with the proviso that the nanostructured sand is free of silicone and free of phosphate and free of organic compounds.

2. The nanostructured sand according to claim 1, **characterized in that** at room temperature, water on the surface of the nanostructured sand has a contact angle θ of ≥ 90°.

3. A method of manufacturing the nanostructured sand according to claim 1 or 2, **characterized in that** the method comprises or consists of the following steps:
a) providing sand comprising one or more sand grains, wherein at least part of the sand grains has a diameter in the range of 0.1 mm to 10 mm, preferably in the range of 0.1 mm to 3 mm,
b) providing one or more silicon-based nanoparticles in a carrier liquid, wherein the nanoparticles are composed of inorganic silicon-based nanoparticles which do not comprise any salts and have a particle diameter of 1 to 900 nm, preferably 5 to 500 nm, more preferably 10 to 200 nm,
c) mixing the sand from step a) with the nanoparticle(s) in the carrier liquid from step b), and then
d) heating the sand-nanoparticle-carrier liquid mixture from step c) until at least part of the sand from step a) exhibits a surface that is at least partially structured with the silicon-based nanoparticle(s) from step b), with the proviso that the nanostructured sand is free of silicone and free of phosphate and free of organic compounds.

## Revendications

1. Sable nanostructuré, comprenant un ou plusieurs grains de sable, au moins une partie des grains de sable présentant un diamètre dans la plage de 0,1 mm à 10 mm, de préférence dans la plage de 0,1 mm à 3 mm, et au moins une partie des grains de sable présentant une surface qui est au moins partiellement structurée avec une ou plusieurs nanoparticules à base de silicium, et la ou les nanoparticules à base de silicium étant composée(s) de nanoparticules inorganiques à base de silicium qui ne comprennent pas de sels et qui ont un diamètre de particule de 1 à 900 nm, de préférence de 5 à 500 nm, de manière plus préférée de 10 à 200 nm, à condition que le sable nanostructuré est exempt de silicone et est exempt de phosphate et est exempt de composés organiques.

2. Sable nanostructuré selon la revendication 1, **caractérisé en ce qu'**à température ambiante, de l'eau sur la surface du sable nanostructuré présente un angle de contact θ de ≥ 90°.

3. Procédé de fabrication du sable nanostructuré selon la revendication 1 ou 2, **caractérisé en ce que** le procédé comprend ou consiste en les étapes suivantes :
a) fournir du sable comprenant un ou plusieurs grains de sable, au moins une partie des grains de sable présentant un diamètre dans la plage de 0,1 mm à 10 mm, de préférence dans la plage de 0,1 mm à 3 mm,
b) fournir une ou plusieurs nanoparticules à base de silicium dans un liquide porteur, les nanoparticules étant composées de nanoparticules inorganiques à base de silicium qui ne comprennent pas de sels et qui ont un diamètre de particule de 1 à 900 nm, de préférence de 5 à 500 nm, de manière plus préférée de 10 à 200 nm,
c) mélanger le sable de l'étape a) avec la ou les nanoparticules dans le liquide porteur de l'étape b), et ensuite
d) chauffer le mélange de sable, de nanoparticules et de liquide porteur de l'étape c) jusqu'à ce qu'au moins une partie du sable de l'étape a) présente une surface qui est au moins partiellement structurée avec la ou les nanoparticules à base de silicium de l'étape b), à condition que le sable nanostructuré est exempt de silicone et est exempt de phosphate et est exempt de composés organiques.
